Europäisches Patentamt

European Patent Office

Office européen des brevets

(11) Publication number: **0 477 952 A2**

# EUROPEAN PATENT APPLICATION

(21) Application number: **91116472.1**

(22) Date of filing: **26.09.91**

(51) Int. Cl.5: **H04B 10/12**

(30) Priority: **28.09.90 US 590244**

(43) Date of publication of application:
**01.04.92 Bulletin 92/14**

(84) Designated Contracting States:
**CH DE ES FR GB IT LI SE**

(71) Applicant: **HUGHES AIRCRAFT COMPANY**
**7200 Hughes Terrace**
**Los Angeles, CA 90045-0066(US)**

(72) Inventor: **Newberg, Irwin L.**
**18401 Blackhawk Street**
**Northridge, California 91326(US)**

(74) Representative: **Patentanwälte Grünecker,**
**Kinkeldey, Stockmair & Partner**
**Maximilianstrasse 58**
**W-8000 München 22(DE)**

(54) **Reconfigurable RF matching circuit.**

(57) An RF fiber optic link that includes a laser diode transmitter, a photodiode detector receiver, a means of optically connecting the transmitter and receiver, and respective reconfigurable active RF matching circuits for the laser input and the photodiode output. Reconfiguration of the active RF matching circuits is achieved by electrical or optical control signals.

FIG.1

## BACKGROUND OF THE INVENTION

The subject invention is directed to fiber optic links for radar systems, and is directed more particularly to reconfigurable impedance matching techniques for radar system fiber optic links.

In order to fully utilize the potential of advanced radar systems with their vast data collection and processing capabilities, fast and very efficient data communication transfer systems must be utilized. RF fiber optic links have the capability of meeting such communications requirements for several reasons. Fiber optic links are not susceptible to radio frequency noise and are capable of operating at very high data rates and at high radio frequencies without creating opportunities for interception and detection. The light weight and small size of fiber optic cables enables the use of highly redundant paths between units and provides for easier mechanical routing in corporate feeds of electronically scanned arrays, thus improving reliability and damage tolerance. Finally, the EMI immunity of fiber optics reduces equipment failures caused by electrical power transients and could also improve the capabilities and reduce the size and weight of radar and other avionic systems.

Typically, a fiber optic link includes a photonic transmitter responsive to an input RF signal for producing an RF amplitude modulated light signal. The modulated light signal is communicated via a fiber optic cable to a photonic receiver that produces an electrical RF output in response to the received modulated light.

A consideration with present fiber optic links is the typically high level of insertion loss introduced by a fiber optic link. A significant factor in the high level of insertion loss is the typical technique of providing broadband 50 ohm impedance matching at the RF input and RF output of the fiber optic link for compatibility with microwave circuits, usually by the addition of resistance. While such impedance matching provides for reduced reflections over a relatively broad bandwidth, it results in substantial power loss.

A further consideration with fiber optic links in general is the lack of consistency in the impedance characteristics of laser diodes utilized in photonic transmitters. There is also a lack of consistency in the impedance characteristics of the photodiodes utilized in photonic receivers, although to a lesser degree.

## SUMMARY OF THE INVENTION

It would therefore be an advantage to provide an RF fiber optic link that provides for impedance matching and increased power transfer.

Another advantage would be to provide an RF fiber optic link that provides for increased power transfer with adjustable impedance matching circuitry.

A further advantage would be to provide an RF impedance matching technique that reduces insertion loss of fiber optic links.

The foregoing and other advantages are provided by the invention in an RF fiber optic link that includes a laser diode transmitter, a photodiode detector receiver, a means of optically connecting the transmitter and receiver, and provisions for RF matching of the laser input and photodiode output.

## BRIEF DESCRIPTION OF THE DRAWING

The advantages and features of the disclosed invention will readily be appreciated by persons skilled in the art from the following detailed description when read in conjunction with the drawing wherein:

FIG. 1 is a schematic of an RF fiber optic link in accordance with the invention.

FIG. 2 is a mechanical illustration of an implementation of a fiber optic link transmitter module in accordance with the invention.

## DETAILED DESCRIPTION

In the following detailed description and in the several figures of the drawing, like elements are identified with like numerals.

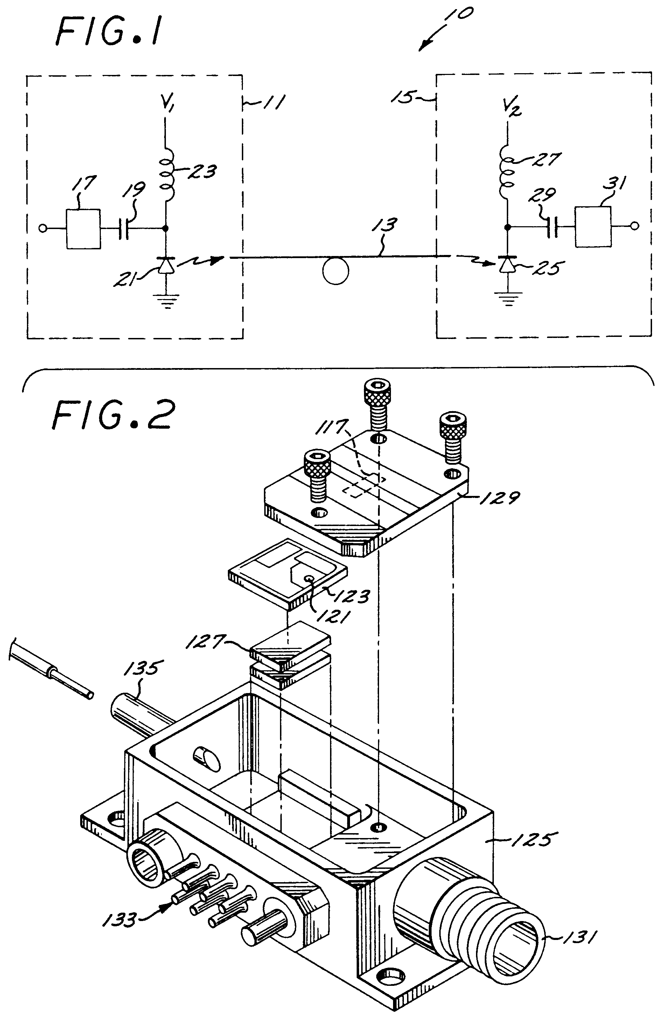

Referring now to FIG. 1, set forth therein is a schematic of an RF fiber optic link 10 that generally includes a photonic transmitter 11, a fiber optic cable 13, and a photonic receiver 15.

The photonic transmitter 11 includes an active input impedance matching circuit 17 for coupling an input RF signal to one terminal of a blocking capacitor 19. The other terminal of the blocking capacitor 19 is connected to the cathode of a laser diode 21 which has its anode connected to a common reference potential such as ground. The cathode of the laser diode 21 is further coupled to a bias voltage V1 via an inductor 23.

The purpose of the capacitor 19 is to allow passage of the RF signal to the laser diode 21 while providing for DC blocking. The inductor 23 allows passage of DC bias current to the laser diode 21 while blocking the RF signal from the source of the bias voltage V1.

In response to the input RF signal, the output of the laser diode 21 is an RF amplitude modulated light signal that is optically coupled into the fiber optic cable 13. At the receiving end, the output of the fiber optic cable 13 is optically coupled to the photonic receiver 15.

The photonic receiver 15 includes a photodiode 25 that is responsive to the light output of the fiber optic cable 13. The cathode of the photodiode 25 is coupled via an inductor 27 to a bias voltage V2, while the anode of the photodiode 25 is connected to ground. The RF signal on the cathode of the photodiode 25 is coupled via a DC blocking capacitor 29 to an active impedance matching network 31 which provides the electrical RF output of the fiber optic link.

The inductor 27 and the capacitor 29 of the photonic receiver 15 provide functions similar to the inductor 23 and the capacitor 19 of the photonic transmitter 11. In particular, the inductor 27 provides bias voltage to the photodiode 25 while blocking the RF signal present at the cathode of the photodiode 25. The capacitor 29 allows passage of the RF signal present at the cathode of the photodiode 25 while providing for DC blocking.

In terms of implementation, the RF matching circuits can be on the same substrates that include the laser diode and the photodiode. Alternatively, the RF matching circuits can be on a substrates separate from the substrates that include the associated laser diode and photodiode, but are in close proximity thereto so as to minimize undesired impedance changes to the laser and photodiode matching circuit over the operating frequency range.

In accordance with the invention, the matching circuits can comprise active circuitry whose impedance matching characteristics are adjusted and controlled by electronic or optical signals so as to provide for impedance matching (i.e., reduced reflections) and increased power transfer as compared to the conventional 50 ohm broadband impedance matching. Such circuitry provides the capability of compensating variations as to design and manufacturing process of the photonic elements, namely, the laser diode and the photodiode, and also the capability of changing the match for different operating frequencies while providing for increased power transfer.

The use of active impedance matching circuits having controllable impedance matching and power transfer characteristics permits for adjustment of the matching circuits for impedance matching optimization, power transfer optimization, as well as changes and comparisons, while maintaining the same optical configuration. The active matching circuit can be used to match the fiber optic link input and output impedance parameters over a desired frequency range centered at a preselected operating frequency. This covers the condition where the intended frequency range of use is known and the active match is used to account for the difference in fiber optic component impedance parameters due to manufacturing tolerances. The active matching could also be used over a large frequency range by tuning the active match as the system operating frequency is changed. This covers the case where it is needed to change the match of a given fiber optic link while it is operating in a system where the input frequency changes.

Power transfer is increased between the signal source and the load when impedance matching is used: (1) to make the reactance of the load equal and opposite to that of the signal source; and (2) to make the resistive component of the load equal to the resistive component of the signal source. This condition is referred to as a "conjugate match." When the above conditions are met, then maximum signal source power is transferred to the load. The matching circuit is typically tuned to the particular operating frequency since most matching is relatively narrow bandwidth. To the extent that the matching circuits can be made broadband, the match will be good over that frequency range. Thus, one parameter or set of parameters would be to meet the conjugate match condition over as wide a frequency range as possible. One way to help provide a wide bandwidth match is to have the signal source as close in distance as possible to the load. Close in this case would mean less than one-eighth of a wavelength at the highest operating frequency. Also, as the frequency is increased, distributed matching elements should be used rather than lumped elements. The matching devices and connecting transmission line should have minimum losses. Any loss in the matching circuit will reduce the power transferred to the load.

Several different matching networks can be configured by using inductors and capacitors in combination, including a "Tee" network wherein the "arms" of the "Tee" are inductors and the center leg is a capacitor to ground. The capacitor to ground could be a varactor diode which has a variable capacity that can be voltage "tuned" to different values. Thus, the varactor is the active device used to change the impedance match at a given frequency or range of frequencies. An example of a "Tee" network is shown on page 20-36 of the "Matching Network Designs with Computer Solutions" section of the 1980 Motorola RF Data Manual.

A combination of transmission line sections such as single, double and triple-stub tuners can also be used to match an impedance that is both resistive and reactive. This is accomplished by changing the length of these transmission lines. Techniques for matching transmission line stubs are known in the art, including those disclosed in pages 193 through 201 of "Transmission Lines and Networks," Walter C. Johnson, McGraw-Hill Book Company, Inc., 1980.

The sections of transmission lines that need to be adjusted in length to achieve active matching can be made from a variable length transmission line, for example, as disclosed in U.S. Serial No. 07/329,997, filed March 29, 1989, for "Non-Dispersive Variable Phase Shifter and Variable Length Transmission Line," incorporated herein by reference. The variable length transmission line disclosed therein uses varactor diodes that are voltage controlled to change the length of the transmission line. In particular, the circuit disclosed therein comprises a spatially positioned series of varactor diodes on a matching substrate which are controlled by a tuning voltage to vary the capacitance at different spatial positions. Thus, an active match can be achieved by using a variable length transmission line to form the section(s) of the single, double or triple-stub tuners for input matching to the laser transmitters or output matching for the photodiode receivers in a fiber optic link. Since the lasers and varactors are all very small components, the sensitivity to frequency changes can be minimized. The device would be voltage tuned (or possible light tuned) to achieve a match over different frequency bands.

The tunable impedance matching circuit can also be one that is tuned with an optical signal that controls varactor diodes, for example. An example of the use of light to control RF parameters is described in "A HIGH-SPEED PHASE SHIFTER BASED ON OPTICAL INJECTION," L.R. Brothers Jr. and C.H. Cox, III, 1987 IEEE MTT-S Digest, pages 819-823, which is incorporated herein by reference.

Referring now to FIG. 2, shown therein is an illustration of a mechanization of a photonic laser diode transmitter in accordance with the invention. A laser diode in the form of a laser chip 121 is supported on a laser substrate 123 which is secured in a housing 125 together with a thermo-electric cooler 127. A microwave substrate 129 supporting an active impedance matching circuit 117 in accordance with the invention is also secured in the housing 125 adjacent the laser diode 121.

The housing 125 further includes an RF connector 131 for the RF input, a control signal connector 133, and a fiber optic cable feed-through 135.

The foregoing has been a disclosure of techniques for providing reconfigurable RF matching for RF fiber optic links which provide for impedance matching (i.e., a low level of reflections), reduced insertion loss in comparison to conventional 50 ohm matching techniques (i.e., increased power transfer), and the capability for changing impedance and bandwidth characteristics.

Although the foregoing has been a description and illustration of specific embodiments of the invention, various modifications and changes thereto can be made by persons skilled in the art without departing from the scope and spirit of the invention as defined by the following claims.

## Claims

1. An RF fiber optic link comprising:
   a first active impedance matching circuit having adjustable impedance and power transfer characteristics responsive to an RF input signals;
   a laser diode responsive to the RF output of said active matching circuit for providing an RF modulated optical signal;
   optical propagating means for propagating said RF modulated optical signal;
   a photodiode responsive to the propagated RF modulated optical signal for providing an RF photodiode output; and
   a second active impedance matching circuit having adjustable impedance and power transfer characteristics responsive to said RF photodiode output for providing an RF link output;
   whereby the impedance and power transfer characteristics of said first active impedance matching circuit are adjusted to provide the desired impedance matching and power transfer relative to said laser diode, and whereby the impedance and power transfer characteristics of said second active impedance matching circuit are adjusted to provide the desired impedance matching and power transfer relative to said photodiode.

2. The impedance matching apparatus of Claim 1 wherein said first and second active matching circuit comprise first and second active circuits having impedance and power transfer characteristics adjustable by electrical signals.

3. The impedance matching apparatus of Claim 1 wherein said first and second active matching circuits comprise first and second active circuits having impedance and power transfer characteristics adjustable by optical signals.

4. A photonic transmitter for an RF fiber optic link comprising:
   a transmitter active impedance matching circuit having adjustable impedance and power transfer characteristics responsive to an RF input signal; and
   a laser diode responsive to the RF output of said active matching circuit for providing an RF modulated optical signal;
   whereby the impedance and power transfer characteristics of said transmitter active impedance matching circuit are adjusted to provide the desired impedance matching and power transfer relative to said laser diode.

5. The photonic transmitter of Claim 4 wherein said transmitter active impedance matching circuit comprises an active circuit having impedance and power transfer characteristics adjustable by electrical signals.

6. The photonic transmitter of Claim 4 wherein said transmitter active impedance matching circuit comprises an active circuit having impedance and power transfer characteristics adjustable by optical signals.

7. A photonic receiver for an RF fiber optic link comprising:

a photodiode responsive to an RF modulated optical signal for providing an RF photodiode output; and

a receiver active impedance matching circuit having adjustable impedance and power transfer characteristics responsive to said RF photodiode output for providing an RF link output;

whereby the impedance and power transfer characteristics of said receiver active impedance matching circuit are adjusted to provide the desired impedance matching and power transfer relative to said photodiode.

8. The photonic receiver of Claim 7 wherein said receiver active impedance matching circuit comprises an active circuit having impedance and power transfer characteristics adjustable by electrical signals.

9. The photonic receiver of Claim 7 wherein said receiver active impedance matching circuit comprises an active circuit having impedance and power transfer characteristics adjustable by optical signals.

FIG.1

FIG.2